# EUROPÄISCHE PATENTSCHRIFT

(11) **EP 0 316 552 B1**
(45) Veröffentlichungstag und Bekanntmachung des Hinweises auf die Patenterteilung: **09.06.1993**
(21) Anmeldenummer: 88116200.2
(22) Anmeldetag: 30.09.1988
(51) Int. Cl.: B23B 41/00

(54) **Vorrichtung zum Einbringen von Befestigungsbohrungen oder Ventilbohrungen in eine Schüssel bzw. eine Felge eines Rades eines Kraftfahrzeuges**
Device for machining bolt holes or valve holes into a wheel disc or a rim of a motor vehicle wheel
Dispositif pour usiner des trous à boulons ou à soupapes dans un disque ou une jante de roue d'un véhicule

(30) Priorität: 23.10.1987 DE 3735858
(43) Veröffentlichungstag der Anmeldung: 24.05.1989
(73) Patentinhaber: CHIRON-WERKE GMBH & CO. KG, 78532 Tuttlingen (DE)
(72) Erfinder: Winkler, Hans-Henning, Dr., D-7200 Tuttlingen (DE); Rütschle, Eugen, D-7202 Mühlheim (DE)
(74) Vertreter: Witte, Alexander, Dr.-Ing.

(56) Entgegenhaltungen:
- WO-A-83/00828
- DD-A- 200 715
- DE-A- 3 026 626
- DE-C- 877 529
- US-A- 4 279 287
- WECK : "Werkzeugmaschinen", VDI-Verlag, Düsseldorf 1980, Seiten 309, 310

## Beschreibung

Die Erfindung betrifft eine Vorrichtung zum Einbringen von Bohrungen in ein Rad eines Kraftfahrzeuges, mit einer Aufnahme zum Aufspannen des Rades und mit einem motorisch betätigbaren Werkzeug, wobei die Aufnahme mit einer zur Mittelachse radial verlaufenden Referenzfläche versehen ist, auf der das aufgespannte Rad mit einer zur Mittelachse radial verlaufenden Referenzebene aufliegt, und mit Anpreßmitteln, die das Rad mit der Referenzebene auf die Referenzfläche drücken.

Eine Vorrichtung der vorstehend genannten Art ist aus dem Dokument US-A-4 279 287 bekannt.

Es ist bekannt, bei der Herstellung von Kraftfahrzeugrädern die Bohrungen, die zum Befestigen, Zentrieren, zum Ausgleichen einer Unwucht oder zur Aufnahme eines Ventils dienen, mittels eines motorisch betätigbaren Werkzeugs in dem Rohling, d.h. dem Verbund aus Schüssel und Felge, anzubringen. Die meisten derartigen Bohrungen, insbesondere die Befestigungsbohrungen, Zentrierbohrungen oder Ausgleichsbohrungen verlaufen gleichachsig, und zwar parallel zur Mittelachse des Rades. Diese gleichachsig verlaufenden Bohrungen können daher in einer einzigen Aufspannung mittels des Werkzeuges eingebracht werden. Bei bekannten Kraftfahrzeugrädern sind aber noch weitere Bohrungen vorgesehen, die zur Mittelachse des Rades geneigt verlaufen. In erster Linie ist hier die Bohrung zur Aufnahme des Ventils zu nennen, die aus baulichen Gründen im Bereich des Felgenhorns angeordnet und dort unter einem Winkel von beispielsweise 30° zur Mittelachse des Rades geneigt verläuft.

Um diese geneigt verlaufenden Bohrungen im Rad herzustellen, ist es seither erforderlich gewesen, nach dem Einbringen der zur Mittelachse des Rades parallelen Bohrungen das Rad umzuspannen und in einem zweiten Bearbeitungszyklus die geneigt verlaufenden Bohrungen anzubringen.

Die Aufteilung der Räderbearbeitung hinsichtlich des Einbringens von Bohrungen in zwei Bearbeitungszyklen hat jedoch den wesentlichen Nachteil, daß sich die Gesamtbearbeitungszeit des Rades deutlich erhöht, weil für das Umspannen der Räder nicht nur zusätzliche Vorrichtungen, sondern auch ein erheblicher zeitlicher Arbeitsaufwand erforderlich sind.

Aus dem eingangs genannten Dokument US-A-4 279 287 sind ein Verfahren und eine Vorrichtung zum Einbringen von Bohrungen in ein Rad eines Kraftfahrzeuges bekannt. Danach wird ein komplettes Rad, d.h. ein Gebilde aus Schüssel, Felge und Reifen, mittels einer Aufspannung auf einem Werkstücktisch gehalten, wobei das Rad in diesem Ausgangszustand lediglich mit einer Ventilbohrung in der Felge versehen ist. Es wird nun die Unwucht des Rades gemessen und danach eine von der geometrischen Mittelachse des Rades abweichende Achse ermittelt, in der dann eine zentrale Radbohrung und um diese zentrale Radbohrung herum angeordnete Befestigungsbohrungen eingebracht werden. Auf diese Weise wird die Exzentrizität des Rades in seiner Ausgangsposition beseitigt, weil die Materialabnahme beim Einbringen der zentralen Bohrung der Befestigungsbohrungen gerade die fabrikationsbedingte Exzentrizität des Rades ohne diese Bohrungen kompensiert.

Aus dem Dokument DE-Buch "Werkzeugmaschinen" von Weck, Manfred, VDI-Verlag GmbH, Düsseldorf, 1980, Seiten 308-311, ist ein schwenkbarer Rundtisch für eine Universalfräsmaschine bekannt. Die Universalfräsmaschine hat eine vertikale Werkzeugachse. Der schwenkbare Rundtisch ist demgegenüber um eine horizontale Achse verschwenkbar, und zwar mittels einer an dem Rundtisch angebrachten Kurbel.

Aus dem Dokument DE-C-877 529 ist ein Schwenktisch zur Bewegung von Werkstücken bekannt. Der bekannte Schwenktisch umfaßt einen auf einem Schwenkteil angeordneten Tisch, wobei das Schwenkteil um eine horizontale Schwenkachse mittels Drehung eines Handrades zusammen mit dem Werkstücktisch verschwenkt werden kann.

Aus dem Dokument WO 83/00828 ist eine Werkstück-Positioniereinrichtung mit drehbaren Werkstücktischen bekannt. Diese bekannte Einrichtung umfaßt auf einem Grund-Tisch zwei symmetrisch zu einer Hochachse des Grund-Tisches angeordnete Werkstücktische, die jeweils um eine Hochachse drehbar und um eine Horizontalachse schwenkbar sind. Um die Schwenkbewegung auszuführen, sind Motoren unterhalb des Grund-Tisches angeordnet, die über eine drehbare Spindel mit einem Schwenkgestänge für die Werkstücktische zusammenwirken.

Aus dem Dokument DD-A-2007 154 ist ein Schwenktisch zum Positionieren und Bearbeiten von Werkstücken bekannt. Dieser bekannte Schwenktisch umfaßt eine im wesentlichen horizontale Spannplatte, die oberhalb einer Grundplatte angeordnet ist. Die Spannplatte ist auf einem Achskreuz mit zwei horizontalen und einander unter einem rechten Winkel schneidenden Achsen angeordnet. Mittels Verstellelementen kann eine vorbestimmte Schräglage der Spannplatte relativ zur Grundplatte eingestellt werden.

Aus dem Dokument DE-A 30 26 626 ist eine Aufspannvorrichtung bekannt, bei der hydrostatisch zu prüfende Ventile auf einer horizontalen Prüfplatte mittels Aufspannvorrichtungen gehalten werden. Die Aufspannvorrichtungen umfassen jeweils einen um eine horizontale Achse schwenkbaren Hebel, der mittels eines Hydraulikzylinders betätigt werden kann.

Der Erfindung liegt daher die Aufgabe zugrunde, eine Vorrichtung der eingangs genannten Art dahingehend weiterzubilden, daß die Gesamt-Bearbeitungszeit vermindert und eine möglichst automatisierte Bearbeitung der Räder möglich wird.

Diese Aufgabe wird erfindungsgemäß dadurch gelöst, daß Mittel zum Verschwenken der Aufnahme mit dem aufgespannten Rad um eine zur Mittelachse des Rades geneigte Achse relativ zu einem Werkstücktisch vorgesehen sind, derart, daß das Werkzeug in einer ersten Verschwenkstellung zum Einbringen einer Befestigungsbohrung in einer Schüssel des Rades und in einer zweiten Verschwenkstellung zum Einbringen einer zur Befestigungsbohrung geneigten Ventilbohrung in einer Felge des Rades ausgerichtet ist, daß zum Verschwenken der Aufnahme diese auf einer mit der geneigten Achse fluchtenden Welle drehfest angeordnet ist, und daß eine Kurbel drehfest auf der Welle sitzt und die Kurbel mittels einer ersten Kolben-Zylinder-Einheit in definierten Winkelschritten betätigbar ist.

Die der Erfindung zugrundeliegende Aufgabe wird auf diese Weise vollkommen gelöst, weil das Rad während der Bearbeitung in ein- und derselben Aufspannung verbleiben kann, und lediglich durch Verschwenken der Aufnahme die erforderliche Umorientierung des Rades bewirkt wird, die erforderlich ist, um bei gleichbleibender Ausrichtung des Werkzeugs nacheinander eine beliebige Anzahl von Bohrungen mit unterschiedlichen Neigungsrichtungen im Rad anzubringen.

Da die Mittel zum Verschwenken mit einer Fremdkraftbetätigung versehen sein können, kann der Verschwenkvorgang automatisiert ausgeführt werden. Er läßt sich damit in eine numerische Steuerung einer Werkzeugmaschine integrieren. Dies eröffnet die Möglichkeit, die Radbearbeitung insgesamt in einem sogenannten Bearbeitungszentrum vorzunehmen, d.h. einer Werkzeugmaschine, die im wesentlichen zum Bohren und Fräsen eingerichtet ist und deren Spindel üblicherweise in drei kartesischen Koordinatenrichtungen verfahrbar ist. Es braucht dann nämlich nur noch das Rad auf der Aufnahme montiert zu werden, und das Bearbeitungszentrum führt anschließend sämtliche Bohrungen einer ersten Ausrichtung und dann nach dem Verschwenken der Aufnahme sämtliche Bohrungen mit geneigter Ausrichtung aus.

Es liegt auf der Hand, daß auf diese Weise die Bearbeitungszeiten deutlich verringert werden können.

Die Erfindung hat ferner den Vorteil, daß die gewünschte Schwenkbewegung der Aufnahme mit extrem einfachen konstruktiven Mitteln realisiert werden kann.

Durch die zur Mittelachse radial verlaufende Referenzfläche, auf der das Rad aufliegt, wird erreicht, daß eine Justierung des Rades in axialer Richtung gewährleistet werden kann, die besonders wichtig ist, um nach dem definierten Verschwenken des Rades die Position der geneigt verlaufenden Bohrung exakt anfahren zu können. Dabei haben die Anpreßmittel den weiteren Vorteil, daß auch während der Bearbeitung des Rades eine Dejustierung des Rades sicher vermieden wird.

Bei einer bevorzugten Weiterbildung der Erfindung ist die erste Kolben-Zylinder-Einheit mit ihrer Kolbenstange an einem Auge am freien Ende der Kurbel angelenkt und mit ihrem Zylinder an einer mit dem Werkstücktisch starr verbundenen Halterung schwenkbar befestigt.

Diese Maßnahme hat den Vorteil, daß mit der geringstmöglichen Anzahl von Maschinenelementen die gewünschte Schwenkbewegung der Aufnahme derart erzielt werden kann, daß eine Fernsteuerung und damit eine Integration der Verschwenkung in die numerische Steuerung eines Bearbeitungszentrums möglich ist.

Weiterhin ist bei dieser Variante bevorzugt, wenn ein Anschlagteil drehfest mit der Welle verbunden ist und Schenkel des Anschlagteils in vorbestimmten Dreh-Endstellungen der Welle auf justierbaren Anschlägen unter Druck anliegen.

Diese Maßnahme hat den Vorteil, daß ohne aufwendige Winkelmeßsysteme eine präzise Einstellung der Aufnahme in den gewünschten Endstellungen möglich ist, weil durch die überdrückte Anlage des Anschlagteils auf den Anschlägen stets eine definierte Endstellung gewährleistet werden kann, unabhängig davon, mit welchem Rest-Druck das Anschlagteil auf den Anschlägen aufliegt.

Bei einer weiteren bevorzugten Fortbildung dieser Variante ist das Anschlagteil von einer Lagerschale der Welle gekapselt und mit einem Schmiermittel der Welle umgeben.

Diese Integration des Anschlagmechanismus in die Lagerschale oder den Lagerbock hat den Vorteil, daß keine Fehlstellungen möglich sind, die bei freiliegenden Anschlägen z.B. dann denkbar wären, wenn sich Bohr- oder Frässpäne auf den Anschlägen absetzen.

Bei einer bevorzugten Ausgestaltung der Erfindung schneidet die geneigte Achse die Mittelachse und verläuft zu dieser rechtwinklig.

Diese Variante der Erfindung, bei der der Ort der geneigt verlaufenden Bohrung in Verschwenkrichtung liegt, hat den Vorteil, daß auch hier wieder der Bewegungsvorgang auf ein kartesisches Koordinatensystem reduziert wird, so daß eine besonders gute Kompatibilität zu den bereits weiter oben erläuterten Bearbeitungszentren üblicher Bauart gewährleistet ist. Es ist auf diese Weise insbesondere möglich, die Räder mit vertikal ausgerichteter Mittelachse anzuordnen und die geneigte Achse in einer Horizontalrichtung verlaufen zu lassen. Es lassen sich dann die gewünschten Bohrungen in einfacher Weise mit einem Bearbeitungszentrum anbringen, dessen Werkzeugachse ebenfalls vertikal verläuft.

Bevorzugt sind in diesem Falle die Anpreßmittel als Niederhalter ausgebildet, die am von der Referenzebene beabstandeten Felgenhorn des Rades angreifen.

Diese Maßnahme hat den Vorteil, daß das Rad problemlos aufgesetzt werden kann, weil die Niederhalter nach dem Aufsetzen des Rades lediglich auf dessen Umfang, nämlich am Felgenhorn, angreifen und das Rad auf die Referenzfläche drücken.

Hierzu ist weiterhin bevorzugt, wenn zwei Niederhalter in diametralen Positionen am Felgenhorn angreifen.

Dies hat den Vorteil daß mit einer Mindestanzahl von Niederhaltern ein sicherer Sitz des Rades auf der Referenzfläche erreicht wird.

Bevorzugt ist bei dieser Variante der Erfindung ferner, wenn die Niederhalter um eine zur geneigten Achse parallele Achse schwenkbar und mittels einer zweiten Kolben-Zylinder-Einheit betätigbar sind.

Diese Maßnahme hat den Vorteil, daß die Niederhalter beim Einsetzen des Rades auf die Aufnahme völlig aus der Bewegungsbahn des Rades weggeschwenkt werden können, so daß auch hier das Aufsetzen des Rades auf die Aufnahme problemlos vonstatten gehen kann. Durch die Ausrichtung der Achsen wird ein einfacher Bewegungsablauf der Niederhalter erreicht, und die Betätigung mittels Kolben-Zylinder-Einheiten ermöglicht eine weitere Automatisierung auch des Aufspannprozesses.

Besonders bevorzugt ist dabei ferner, wenn die Niederhalter und die zweite Kolben-Zylinder-Einheit in die Aufnahme integriert und mit dieser zusammen verschwenkbar sind.

Dies hat den Vorteil, daß ein besonders kompakter Aufbau entsteht, bei dem auch die Verschlauchung der Kolben-Zylinder-Einheit auf ein Minimum reduziert wird.

Weiterhin wird nach der Erfindung eine gute Wirkung dann erzielt, wenn aus der Referenzfläche ein Spreizglied axial vorsteht, das in eine Mittenöffnung des aufgespannten Rades vorzugsweise formschlüssig greift und dieses durch Aufspreizen radial und axial fixiert.

Diese Maßnahme hat den Vorteil, daß neben der eine axiale Position definierenden und gewährleistenden Referenzfläche auch eine radiale Position definiert und fixiert werden kann, wobei das Verspannen des Rades durch Aufspreizen des Spreizgliedes alternativ oder zusätzlich zu den weiter oben genannten Niederhaltern eingesetzt werden kann.

Auch bei dieser Variante der Erfindung ist bevorzugt, wenn das Spreizglied mittels einer dritten Kolben-Zylinder-Einheit betätigbar ist.

Auch dies bringt nämlich den Vorteil mit sich, daß eine einfache Steuerung durch Fremdkraftbetätigung möglich ist und damit eine Integration in eine numerische Steuerung des Bearbeitungszentrums.

Weiterhin ist bevorzugt, wenn die zweite und die dritte Kolben-Zylinder-Einheit an gemeinsame Fluid-Leitungen angeschlossen sind.

Diese Maßnahme hat den Vorteil, daß durch ein gemeinsames Betätigungselement sowohl die Niederhalter wie auch das Spreizglied betätigt werden können. Dies hat bei minimiertem apparativem Aufwand die Wirkung, daß das auf die Aufnahme aufgesetzte Rad durch vorzugsweise gleichzeitiges Betätigen des Spreizgliedes und der Niederhalter radial und axial fixiert werden kann.

Weiterhin ist bei der Erfindung bevorzugt, wenn die Aufnahme in der Referenzfläche mit axialen Öffnungen an den Positionen der Bohrungen des aufgespannten Rades versehen ist, die einen größeren lichten Querschnitt aufweisen als die Bohrungen.

Diese Maßnahme hat den Vorteil, daß die Bohrungen nicht nur mit Werkzeugen beliebiger axialer Abmessungen bearbeitet werden können, sondern daß auch Werkzeuge verwendet werden können, die radial weiter ausladend sind. Dies ist vor allem dann von Vorteil, wenn auch die vom Werkzeughalter abgewandte Oberfläche des Rades mit einer Ansenkung versehen werden soll, wozu bevorzugt Werkzeuge eingesetzt werden, die durch einen engeren Querschnitt der Bohrung hindurchgeführt werden und sich dann auf der Rückseite des Werkstücks radial aufspreizen bzw. radial verfahren werden.

Eine weitere bevorzugte Ausführungsform der Erfindung zeichnet sich dadurch aus, daß die Aufnahme mit einem exzentrischen, axialen Zentrierdorn versehen ist, der zur Definition einer Drehstellung des Rades relativ zur Aufnahme in eine zugehörige exzentrische, axiale Öffnung des Rades greift.

Diese Maßnahme hat den Vorteil, daß die Räder nur in einer vorbestimmten Winkelstellung auf die Aufnahme aufgesetzt werden können, so daß Fehlbearbeitungen ausgeschlossen sind.

Bei einer besonders bevorzugten Ausführungsform der Erfindung sind zwei Aufnahmen auf dem Werkstücktisch angeordnet und mittels gemeinsamer Verschwenkmittel verschwenkbar, wobei der Werkstücktisch um eine zu den Mittelachsen äquidistante und parallele Achse verschwenkbar ist.

Diese Maßnahmen haben den wesentlichen Vorteil, daß auf einem verschwenkbaren Werkstücktisch jeweils ein Rad in einer Bearbeitungsposition im Arbeitsbereich der Spindel des Bearbeitungszentrums angeordnet sein kann, während die gegenüberliegende Position des Werkstücktischs als Bestückungsstation dient. An der Bestückungsstation kann ein Benutzer der erfindungsgemäßen Vorrichtung ein bearbeitetes Rad von der Aufnahme abnehmen und ein neues, unbearbeitetes Rad auf die Aufnahme aufsetzen. Selbstverständlich kann dies auch mittels eines automatisierten Handhabungssystems erfolgen. Nach der Entnahme des bearbeiteten Rades und dem Aufsetzen des nächsten, unbearbeiteten Rades auf die Aufnahme wird der Werkstücktisch, sobald der Bearbeitungsvorgang an dem Rad in der Bearbeitungsstation abgeschlossen ist, um beispielsweise 180° verschwenkt, so daß sich die vorstehend geschilderten Arbeitsschritte anschließen können. Auf diese Weise wird eine extrem hohe Auslastung der Arbeitszeit des Bearbeitungszentrums erreicht.

Bei dieser Ausführungsform der Erfindung ist bevorzugt, wenn die Aufnahmen auf miteinander fluchtenden Wellen angeordnet sind und der axiale Abstand von aneinandergrenzenden Enden der Wellen justierbar ist.

Diese Maßnahme hat den Vorteil, daß eine zusätzliche Justiermöglichkeit besteht, mit der gewährleistet werden kann, daß beim Verschwenken des Werkstücktischs um beispielsweise 180° die Aufnahmen der Räder in jeweils exakt übereinstimmende Bearbeitungspositionen relativ zur Spindel des Bearbeitungszentrums gelangen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgen den Beschreibung naher erläutert. Es zeigen:
- Fig. 1: eine Seitenansicht, teilweise aufgebrochen, eines Rades mit Felge und Schüssel sowie den erforderlichen Bohrungen;
- Fig. 2: in stark vergrößertem Maßstab eine Befestigung eines Rades an einem Kraftfahrzeug nach dem Stand der Technik;
- Fig. 3: eine Draufsicht auf ein Ausführungsbeispiel einer erfindungsgemäßen Vorrichtung mit einer Tandem-Anordnung von Aufnahmen für Räder;
- Fig. 4: einen Schnitt durch einen Teil der Vorrichtunggemäß Fig. 3, und zwar entlang der Linie IV-IV von Fig. 3, in vergrößertem Maßstab;
- Fig. 5: eine Ansicht er Vorrichtung gemäß Fig. 3, und zwar in Richtung der Pfeile V-V von Fig. 3, ebenfalls in vergrößertem Maßstab;
- Fig. 6: einen weiteren Schnitt durch die Vorrichtung gemäß Fig. 3, und zwar entlang der Linie VI-VI von Fig. 3, ebenfalls in vergrößertem Maßstab;
- Fig. 7: einen weiteren Schnitt durch die Vorrichtung gemäß Fig. 3, und zwar entlang der Linie VII-VII von Fig. 3, gleichfalls in vergrößertem Maßstab.

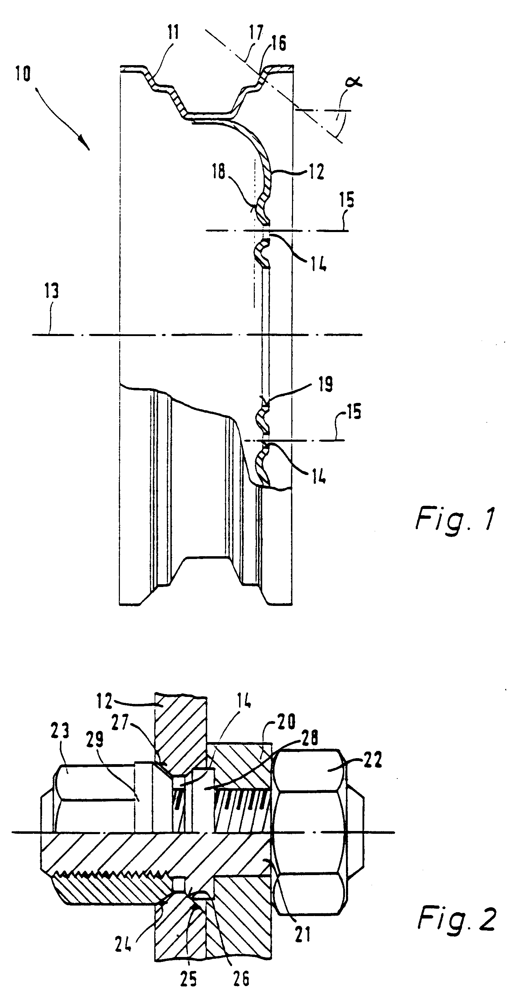

In Fig. 1 bezeichnet 10 insgesamt ein Rad eines Kraftfahrzeuges, das der Übersichtlichkeit halber ohne Reifen dargestellt ist. Das Rad 10 besteht in an sich bekannter Weise aus einer Felge 11 sowie einer Schüssel 12, die um eine erste Achse 13 des Rades 10 herum angeordnet sind. Die Schüssel 12 ist über einen Umfang verteilt, mit einer Mehrzahl von Befestigungsbohrungen 14, beispielsweise vier der fünf derartigen Befestigungsbohrungen 14 versehen. Die zweiten Achsen 15 der Befestigungsbohrungen 14 verlaufen zur ersten Achse 13 des Rades 10 parallel.

Die Felge 11 ist in der Nähe ihres äußeren Umfanges mit einer Ventilbohrung 16 versehen, deren dritte Achse 17 zur ersten Achse 13 des Rades 10 unter einem Winkel α geneigt verläuft.

Die Befestigungsbohrungen 14 dienen dazu, um das Rad 10 mittels geeigneter Schrauben oder sonstiger Befestigungsmittel in einer Referenzebene 18 an einem Achsflansch des Kraftfahrzeuges festzuschrauben, der eine Mittenöffnung 19 der Schüssel 12 durchsetzt. Die Ventilbohrung 16 dient dazu, um das Ventil eines in Fig. 1 nicht dargestellten Reifens aufzunehmen.

Es versteht sich, daß die vorstehend genannten Bohrungen 14 und 16 nur beispielhaft zu verstehen sind und daß sich die Erfindung auch auf weitere Bohrungen, beispielsweise Zentrierbohrungen oder Ausgleichsbohrungen, für eine Unwucht des Rades 10 erstreckt.

Fig. 2 zeigt mit einem Ausführungsbeispiel eine bekannte Art der Befestigung von Rädern 10 an einem Achsflansch 20 des Kraftfahrzeuges. Schraubverbindungen der gezeigten Art sind beispielsweise aus der Deutschen Industrienorm DIN 74 361 bekannt.

Der Achsflansch 20 ist mit einem Schraubbolzen 21 durchsetzt, der von der Rückseite des Achsflanschs 20 mit einer Kontermutter 22 gehalten ist. Auf das andere Ende des Schraubbolzens 21 ist eine Radmutter 23 aufgeschraubt, um die Schüssel 12 des Rades 10 am Achsflansch 20 festzuschrauben.

Die Schüssel 12 ist im Bereich der Befestigungsbohrung 14 mit einem ersten Zentrierkonus 24 und einem zweiten Zentrierkonus 25 auf der Vorder- bzw. Rückseite versehen. Den Konussen 24, 25 sind ein erster Gegenkonus 26 und ein zweiter Gegenkonus 27 zugeordnet, die an einem Bund 28 des Schraubbolzens 21 bzw. an der Rückseite der Radmutter 23 angeordnet sind.

Durch die beschriebene Anordnung wird eine selbstzentrierende Befestigung des Rades 10 am Achsflansch 20 erreicht.

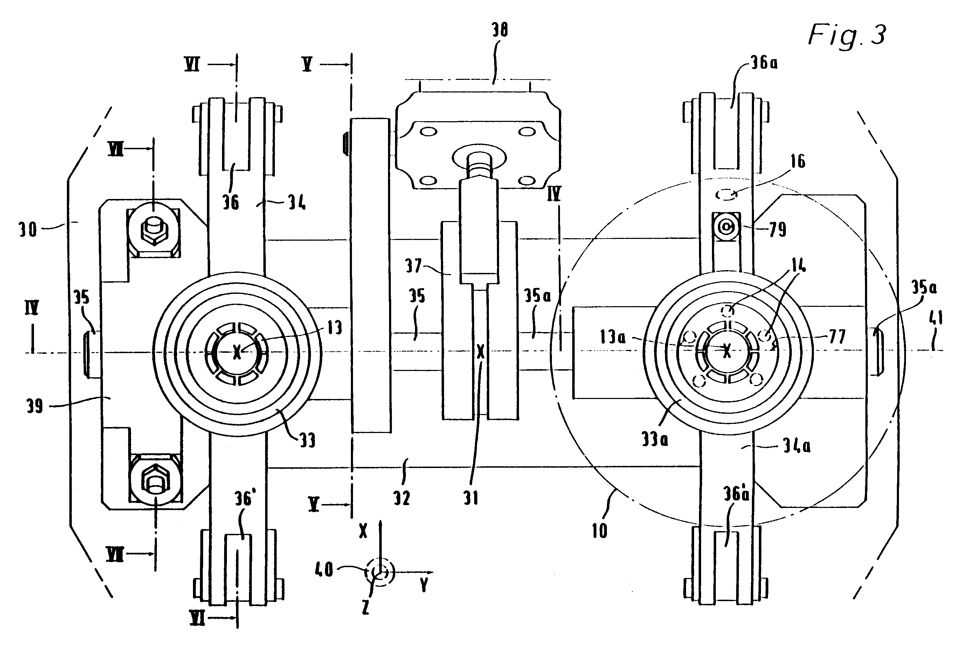

Zum Anbringen der Befestigungsbohrungen 14 und der Ventilbohrung 16 sowie ggf. weiterer Bohrungen wird erfindungsgemäß eine Vorrichtung vorgeschlagen, wie sie nachstehend anhand der Fig. 3 bis 7 erläutert werden soll.

Fig. 3 zeigt eine Draufsicht auf einen Werkstucktisch 30 eines Bearbeitungszentrums, der um eine Hochachse 31 schwenkbar ist, und zwar vorzugsweise jeweils gegenläufig um 180°.

Auf dem Werkstücktisch 30 ist eine Grundplatte 32 montiert, die in symmetrischer Anordnung zur Hochachse 31 zwei Aufnahmen 33, 33a für die Räder 10 trägt. Die Aufnahmen 33 und 33a sind auf Wippen 34, 34a angeordnet. Die Wippen 34, 34a sitzen drehfest auf Wellen 35, 35a, die koaxial verlaufen und mit Stirnflächen einander benachbart angeordnet sind. An den freien Enden der Wippen 34, 34a sind Niederhalter 36, 36' bzw. 36a, 36a' angeordnet.

Eine Kurbel 37 ist drehfest mit den Wellen 35, 35a verbunden. Die Kurbel 37 wird von einer ersten Kolben-Zylinder-Einheit 38 betätigt.

Am linken freien Ende der Welle 35 ist ein Anschlag 39 angeordnet, um die Schwenkbewegung der Wippen 34 und 34a zu begrenzen.

Mit 40 ist ein zum Werkstücktisch 30 gehöriges Bearbeitungszentrum angedeutet. Das Werkzeug 40 ist entlang dreier karte sischer Koordinaten verfahrbar, von denen die Achsen x und y in der Zeichenebene der Fig. 3 liegen und die Achse z rechtwinklig dazu verläuft.

Bei einem typischen Ausführungsbeispiel der Erfindung ist der Werkstücktisch 30 in einer Horizontalebene angeordnet und um eine vertikale Achse 31 verdrehbar. Demzufolge liegen auch die Achsen x und y in einer Horizontalebene, und z symbolisiert eine vertikale Spindelachse.

Die Achse, entlang der sich die Wellen 35 und 35a erstrecken, ist in Fig. 3 mit 41 bezeichnet.

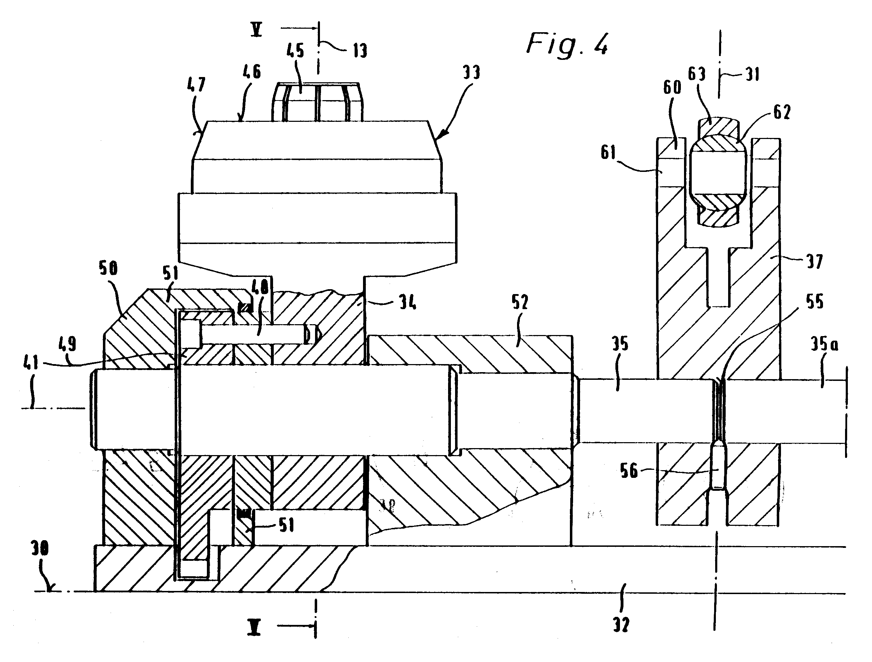

Fig. 4 zeigt einen Teilschnitt entlang der Linie IV-IV von Fig. 3 und damit eine Seitenansicht der Aufnahme 33.

In Richtung der ersten Achse 13 des Rades 10 steht axial aus der Aufnahme 33 ein Spreizglied 45 vor, das sich aus einer radialen Referenzfläche 46 erhebt. An die Referenzfläche 46 schließt sich ein nach unten öffnender konischer Abschnitt 47 an. Die Abmessungen der Referenzfläche 46, des konischen Abschnitts 47 sowie der weiteren Komponenten der Aufnahme 33 sind an den Innenraum der Schüssel 12 des jeweils zu bearbeitenden Rades 10 angepaßt.

Die Wippe 34 ist mittels einer axial verlaufenden Schraube 48 drehstarr mit einem Anschlagteil 49 verbunden, das in einer ersten Lagerschale 50 drehbar angeordnet ist. Die Lagerschale 50 stellt gleichzeitig eine Kapselung 51 dar, so daß das Anschlagteil 49 nach außen hin abgekapselt ist und vom Schmiermittel der Welle 35 umgeben wird.

Im mittleren Bereich ist die Welle 35 in einer zweiten Lagerschale 52 drehbar gehalten, wobei sich die Lagerschalen 50 und 52 zu beiden Seiten der Wippe 34 befinden.

In der rechten Hälfte von Fig. 4 ist erkennbar, daß die Wellen 35, 35a sich in Richtung derselben vierten Achse 41 erstrecken und mit ihren Stirnflächen eng aneinandergrenzen. Die Stirnflächen sind mit Fasen 55 versehen, und ein Spreizstift 56 oder eine Spreizschraube ist mit ihrer Spitze derart angeordnet, daß sie bei axialer Verstellung die Wellen 35 und 35a gegeneinander zu distanzieren vermag. Auf diese Weise können die Positionen der Aufnahmen 33 und 33a relativ zur Hochachse 31 präzise einjustiert werden, so daß beim Hin- und Herverschwenken des Werkstücktischs 30 um jeweils 180° die Aufnahmen 33 und 33a jeweils in eine identische Position im Arbeitsbereich der Spindel des Bearbeitungszentrums gelangen.

In der rechten Hälfte von Fig. 4 ist ferner zu erkennen, daß die Kurbel 37 in ein gabelförmiges freies Ende 60 ausläuft, das einen parallel zur vierten Achse 41 verlaufenden Bolzen 61 trägt. Der Bolzen 61 faßt durch ein Auge 62, das am freien Ende einer Kolbenstange 63 angeordnet ist.

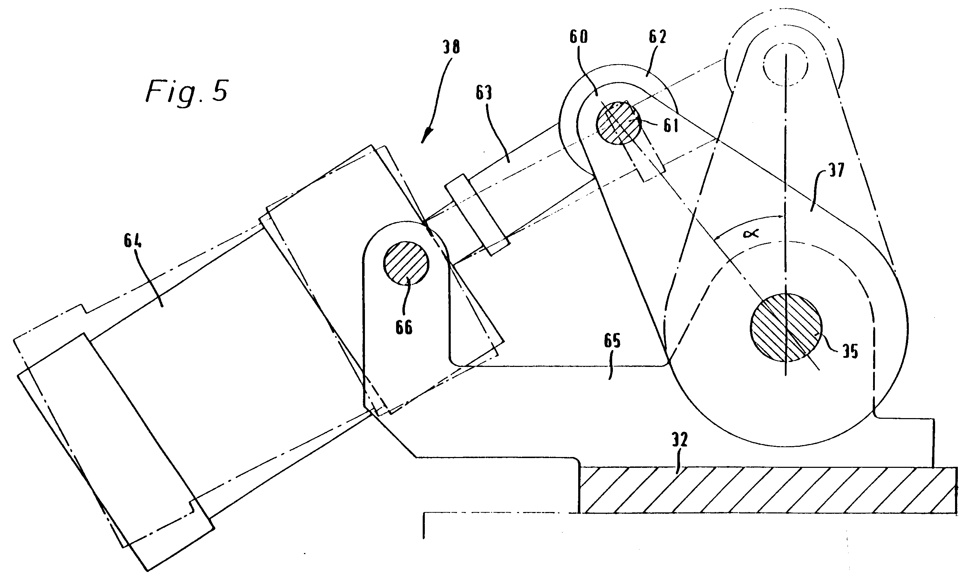

Wie man ergänzend aus Fig. 5 erkennt, ist der Kolben 63 Teil der ersten Kolben-Zylinder-Einheit 38. Der Zylinder 64 der ersten Kolben-Zylinder-Einheit 38 ist seinerseits an einer Halterung 65 mittels eines Bolzens 66 schwenkbar gelagert. Die Achsen der Bolzen 61 und 66 verlaufen parallel zur vierten Achse 41 der Welle 35.

Die Halterung 65 ist ihrerseits raumfest mit der Grundplatte 32 verbunden.

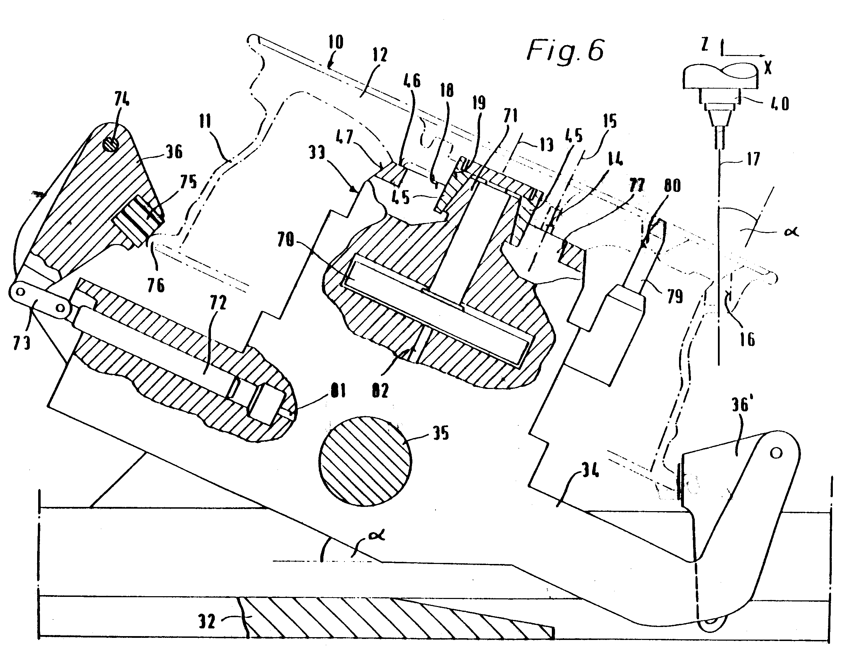

Fig. 6 zeigt weitere Einzelheiten der Aufspannung eines Rades 10 auf der Aufnahme 33.

In die Aufnahme 33 ist eine zweite Kolben-Zylinder-Einheit 70 integriert, deren Betätigungsrichtung in der ersten Achse 13, der Mittelachse des Rades 10 liegt. Das freie Ende der zweiten Kolben-Zylinder-Einheit 70 betätigt einen Spreizkonus 71, der im nicht-aktivierten Zustand gerade formschlüssig oder mit geringfügigem Untermaß durch die Mittenöffnung 19 eines zunächst noch lose auf die Aufnahme 33 aufgesetzten Rades 10 faßt. Bei Betätigung der zweiten Kolben-Zylinder-Einheit 70 spreizt sich der Spreizkonus 71 radial nach außen und kann auf diese Weise das Rad 10 radial zentrieren und axial sowie radial halten.

In die Wippe 34 sind in diametraler Richtung zwei dritte Kolben-Zylinder-Einheiten 72 integriert, von denen eine in Fig. 6 im Teilschnitt zu erkennen ist. Die dritte Kolben-Zylinder-Einheit 72 trägt an ihrem freien Betätigungsende ein Gestänge 73, über das sie am unteren Ende des Niederhalters 36 angreift. Der Niederhalter 36 ist um einen Bolzen 74 schwenkbar gelagert, der sich parallel zur Welle 35 erstreckt.

Der Niederhalter 36 ist bevorzugt mit einem Anlagestück 75, z.B. aus Kunststoff, versehen, mit dem er sich von innen bzw. der Darstellung der Fig. 6 von oben an ein Felgenhorn 76 des Rades 10 anlegt, wenn dieses mit seiner Referenzebene 18 auf die Referenzfläche 46 der Aufnahme 33 aufgelegt wurde.

An einer definierten Umfangsstellung der Aufnahme 33 steht radial von dieser ein Halter für einen axialen Zentrierdorn 79 ab, der bei korrekt auf die Aufnahme 33 aufgesetztem Rad 10 durch eine zugehörige definierte Öffnung 80 in der Schüssel 12 greift.

Die Kolben-Zylinder-Einheiten 70, 72 sind über Fluidleitungen 81, 82 mit einem Fluid, beispielsweise Preßluft oder Hydrauliköl beaufschlagbar. Die Fluidleitungen 81, 82 können zur gemeinsamen Betätigung der Kolbe-Zylinder-Einheiten 70 und 72 miteinander verbunden und an ein gemeinsames Versorgungs- und Schaltgerät angeschlossen sein.

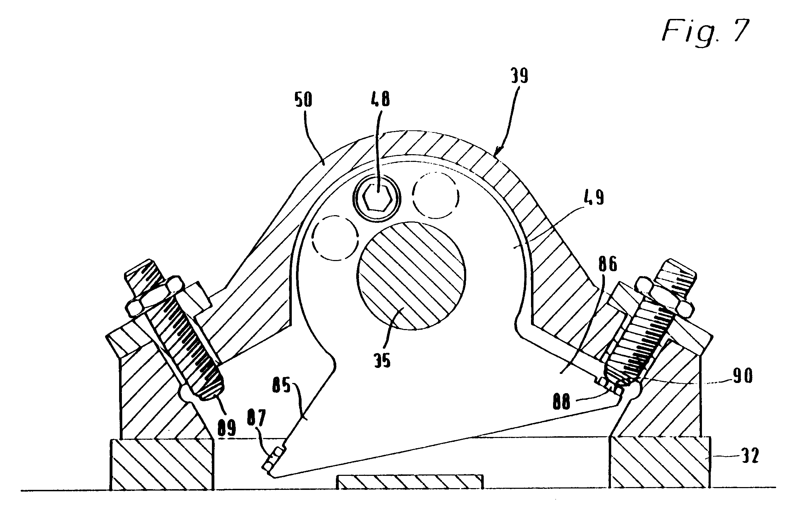

Fig. 7 zeigt schließlich noch Einheiten des Anschlages 39.

Das Anschlagteil 49 läuft nach unten in zwei Schenkel 85, 86 aus, die an ihren freien Enden mit Anschlagschrauben 87, 88 versehen sind. Die erste Lagerschale 50 ist im Bereich ihres Überganges zur Grundplatte 32 ebenfalls mit Anschlagschrauben 89 und 90 versehen, so daß durch Einstellen der Anschlagschrauben 87 bis 90 ein begrenzter Verschwenkbereich für das Anschlagteil 49 eingestellt werden kann. Dieser Verschwenkbereich entspricht bei dem in den Fig. dargestellten Ausführungsbeispiel einem Winkel α von beispielsweise 15°.

Die Wirkungsweise der in den Fig. 3 bis 7 dargestellten Vorrichtung ist wie folgt:
Durch die numerische Steuerung der Werkzeugmaschine wird der Werkstücktisch 30, auf dem sich sämtliche vorstehend erläuterten Komponenten finden, beispielsweise in die in Fig. 3 dargestellte Stellung verschwenkt, in der sich die Aufnahme 33a im Arbeitsraum der Spindel befinden und damit eine Bearbeitungsseite des Werkstücktischs 30 definieren möge, während sich die Aufnahme 33 dann auf der sogenannten Bestückungsseite im Zugriffsbereich eines Benutzers des Bearbeitungszentrums befindet.

In dieser Position bearbeitet das mit 40 angedeutete Werkzeug des Bearbeitungszentrums das Rad 10, das auf die Aufnahme 33a aufgespannt ist. Hierzu werden beispielsweise zunächst die fünf Befestigungsbohrungen 14 angebracht, die üblicherweise als Stufenbohrungen mit beidseitigen Ansenkungen ausgeführt sind. Während des Anbringens der Befestigungsbohrungen 14 befindet sich die Aufnahme 33a mit der Wippe 34a in einer Position, in der die Referenzfläche 46 sich parallel zur Oberfläche des Werkstücktischs 30 und damit senkrecht zur z-Achse des Werkzeugs 40 befindet.

Nachdem alle fünf Befestigungsbohrungen 14 oder ggf. weitere gleichachsig gerichtete Bohrungen angebracht wurden, wird die erste Kolben-Zylinder-Einheit 38 betätigt und die Kolbenstange 63 in den Zylinder 64 eingezogen. Auf diese Weise wird die Kurbel 37 in der Darstellung der Fig. 5 im Gegenuhrzeigersinn auf der strichpunktiert eingezeichneten Stellung in die durchgezogen eingezeichnete Stellung verschwenkt. Die Aufnahme 33 gelangt damit in die in Fig. 6 dargestellte verschwenkte Stellung, in der die dritte Achse 17 der Ventilbohrung 16 sich parallel zur z-Achse des Werkzeugs 40 erstreckt. Durch Verfahren der Spindel kann das Werkzeug 40 in eine Bearbeitungsposition gebracht werden, in der die Werkzeuge mit der Ventilbohrung 16 fluchten und die Ventilbohrung 16 kann in der beschriebenen Weise angebracht werden.

Nach dem Anbringen der zur Mittelachse 13 des Rades 10 geneigten Ventilbohrung 16 wird durch erneutes Betätigen der ersten Kolben-Zylinder-Einheit 38 die Aufnahme 33 wieder in die horizontal ausgerichtete Ausgangsstellung gebracht und der Werkstücktisch 30 um seine Hochachse 31 um 180° gedreht.

Durch Betätigen der zweiten und dritten Kolben-Zylinder-Einheiten 70, 72 werden nun die Niederhalter 36 und 36' vom Felgenhorn 76 abgehoben und der Spreizkonus 71 radial eingefahren, so daß das bearbeitete Rad 10 von der Aufnahme 33 in axialer Richtung abgehoben werden kann.

Der Benutzer der Werkzeugmaschine kann nun auf die freie Aufnahme 33 ein neues, unbearbeitetes Rad 10 aufsetzen. Dies gelingt wegen der Anwesenheit des Zentrierdorns 79 nur in einer Winkelstellung des Rades 10, in der der Zentrierdorn 79 gerade in die entsprechende Öffnung 80 in der Schüssel 12 des Rades 10 faßt.

Das Rad 10 gelangt beim Aufsetzen auf die Aufnahme 33 mit seiner Referenzebene 18 in Anlage auf der Referenzfläche 46. Durch Betätigen des in den Fig. nicht dargestellten Steuer- und Schaltgeräts wird nun erneut ein Druckmedium in die Fluidleitungen 81, 82 eingelassen, so daß sich die Niederhalter 36 und 36' mit ihren Anlagestücken 75 von oben an das Felgenhorn 76 anlegen und gleichzeitig oder geringfügig verzögert der Spreizkonus 71 ausgefahren wird, um sich von innen in der Mittenöffnung 19 des Rades 10 kraft- und formschlüssig einzuklemmen.

## Patentansprüche

1. Vorrichtung zum Einbringen von Bohrungen (14) in ein Rad (10) eines Kraftfahrzeuges, mit einer Aufnahme (33, 33a) zum Aufspannen des Rades (10) und mit einem motorisch betätigbaren Werkzeug (40), wobei die Aufnahme (33, 33a) mit einer zur Mittelachse (13) radial verlaufenden Referenzfläche (46) versehen ist, auf der das aufgespannte Rad (10) mit einer zur Mittelachse (13) radial verlaufenden Referenzebene (18) aufliegt, und mit Anpreßmitteln, die das Rad (10) mit der Referenzebene (18) auf die Referenzfläche (46) drücken, dadurch gekennzeichnet, daß Mittel (38, 60 bis 66) zum Verschwenken der Aufnahme (33, 33a) mit dem aufgespannten Rad (10) um eine zur Mittelachse (13) des Rades (10) geneigte Achse (41) relativ zu einem Werkstücktisch (30) vorgesehen sind, derart, daß das Werkzeug (40) in einer ersten Verschwenkstellung zum Einbringen einer Befestigungsbohrung (14) in einer Schüssel (12) des Rades (10) und in einer zweiten Verschwenkstellung zum Einbringen einer zur Befestigungsbohrung (14) geneigten Ventilbohrung (16) in einer Felge (11) des Rades ausgerichtet ist, daß zum Verschwenken der Aufnahme (33, 33a) diese auf einer mit der geneigten Achse (41) fluchtenden Welle (35, 35a) drehfest angeordnet ist, daß ferner eine Kurbel (37) drehfest auf der Welle (35, 35a) sitzt, und daß die Kurbel (37) mittels einer ersten Kolben-Zylinder-Einheit (38) in definierten Winkelschritten (α) betätigbar ist.

2. Vorrichtung nach Anspruch 1, dadurch gekennzeichnet, daß die erste Kolben-Zylinder-Einheit (38) mit ihrer Kolbenstange (63) an einem Auge (62) am freien Ende (60) der Kurbel (37) angelenkt und mit ihrem Zylinder (64) an einer mit dem Werkstücktisch (30) starr verbundenen Halterung (65) schwenkbar befestigt ist.

3. Vorrichtung nach Anspruch 1 oder 2, dadurch gekennzeichnet, daß ein Anschlagteil (49) drehfest mit der Welle (35) verbunden ist und daß Schenkel (85, 86) des Anschlagteils (49) in vorbestimmten Dreh-Endstellungen der Welle (35) auf justierbaren Anschlägen (89, 90) unter Druck anliegen.

4. Vorrichtung nach Anspruch 3, dadurch gekennzeichnet, daß das Anschlagteil (49) von einer Lagerschale (50) der Welle (35) gekapselt und von einem Schmiermittel der Welle (35) umgeben ist.

5. Vorrichtung nach einem der Ansprüche 1 bis 4, dadurch gekennzeichnet, daß die geneigte Achse (41) die Mittelachse (13) schneidet und zu dieser rechtwinklig verläuft.

6. Vorrichtung nach einem der Ansprüche 1 - 5, dadurch gekennzeichnet, daß die Anpreßmittel als Niederhalter (36) ausgebildet sind, die am von der Referenzebene (18) beabstandeten Felgenhorn (76) des Rades (10) angreifen.

7. Vorrichtung nach Anspruch 6, dadurch gekennzeichnet, daß zwei Niederhalter (36, 36 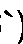 ) in diametralen Positionen am Felgenhorn (76) angreifen.

8. Vorrichtung nach Anspruch 6 oder 7, dadurch gekennzeichnet, daß die Niederhalter (36) um eine zur geneigten Achse (41) parallele Achse schwenkbar und mittels einer zweiten Kolben-Zylinder-Einheit (72) betätigbar sind.

9. Vorrichtung nach Anspruch 8, dadurch gekennzeichnet, daß die Niederhalter (36, 36 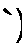 ) und die zweite Kolben-Zylinder-Einheit (72) in die Aufnahme (33, 33a) integriert und mit dieser zusammen verschwenkbar sind.

10. Vorrichtung nach einem der Ansprüche 1 bis 9, dadurch gekennzeichnet, daß aus der Referenzfläche (46) ein Spreizglied (45) axial vorsteht, das in eine Mittenöffnung (19) des aufgespannten Rades (10) greift und dieses durch Aufspreizen radial und axial fixiert.

11. Vorrichtung nach Anspruch 10, dadurch gekennzeichnet, daß das Spreizglied (45) mittels einer dritten Kolben-Zylinder-Einheit (70) betätigbar ist.

12. Vorrichtung nach Anspruch 8 und 11, dadurch gekennzeichnet, daß die zweite und die dritte Kolben-Zylinder-Einheit (72, 70) synchron betätigbar sind.

13. Vorrichtung nach Anspruch 12, dadurch gekennzeichnet, daß die zweite und die dritte Kolben-Zylinder-Einheit (72, 70) an gemeinsame Fluid-Leitungen (81, 82) angeschlossen sind.

14. Vorrichtung nach einem der Ansprüche 1 bis 13, dadurch gekennzeichnet, daß die Aufnahme (33, 33a) in der Referenzfläche (46) mit axialen Öffnungen (77) an den Positionen der Bohrungen (14) des aufgespannten Rades (10) versehen ist, die einen größeren lichten Querschnitt aufweisen als die Bohrungen (14).

15. Vorrichtung nach einem der Ansprüche 1 bis 14, dadurch gekennzeichnet, daß die Aufnahme (33, 33a) mit einem exzentrischen, axialen Zentrierdorn (79) versehen ist, der zur Definition einer Drehstellung des Rades (10) relativ zur Aufnahme (33, 33a) in eine zugehörige exzentrische, axiale Öffnung (80) des Rades (10) greift.

16. Vorrichtung nach einem der Ansprüche 1 bis 15, dadurch gekennzeichnet, daß zwei Aufnahmen (33, 33a) auf dem Werkstücktisch (30) angeordnet und mittels gemeinsamer Verschwenkmittel (38, 60 bis 66) verschwenkbar sind, wobei der Werkstücktisch (30) um eine zu den Mittelachsen (13, 13a) äquidistante und parallele Achse (31) verschwenkbar ist.

17. Vorrichtung nach Anspruch 16, dadurch gekennzeichnet, daß die Aufnahmen (33, 33a) auf miteinander fluchtenden Wellen (35, 35a) angeordnet sind und daß der axiale Abstand von aneinandergrenzenden Enden der Wellen (35, 35a) justierbar ist.

## Claims

1. Device for producing bores (14) in a wheel (10) of a motor vehicle, including a holding fixture (33,33a) for mounting the wheel (10) and a motor-operated tool (40), wherein said holding fixture (33,33a) comprises a reference surface (46) extending radially to a center axis (13) and supporting the mounted wheel (10) with a reference plane (18) extending radially to said central axis (13), and further pressing said wheel (10) with its reference plane (18) onto said reference surface (46) using pressing means, characterized in that means (38,60 through 66) are provided for pivoting said holding fixture (33,33a), with said wheel (10) mounted therein, relative to a work table (30) about an axis (41) extending at a certain inclination relative to said center axis (13) of said wheel (10), such that said tool (40) is aligned with a wheel disk (12) of said wheel when in a first pivot position for producing a mounting bore (14) in said wheel disk, and is aligned with a rim (11) of said wheel when in a second pivot position for producing a valve bore (16) inclined to said mounting bore (14) in said rim (11) of said wheel, said holding fixture (33,33a) being fixed against relative rotation on a shaft (35,35a) aligned with said inclined axis (41), for pivoting said holding fixture (33,33a), in that a crank (37) is also fixed against relative rotation on said shaft (35,35a), and in that said crank (37) can be actuated by defined angular steps (α) by means of a first piston-and-cylinder unit (38).

2. Device according to claim 1, characterized in that said first piston-and-cylinder unit (38) is hinged with its piston rod (63) to a lug (62) provided on a free end (60) of said crank (37) and is pivotably mounted with its cylinder (64) on a mounting means (65) connected rigidly with the work table (30).

3. Device according to claim 1 or 2, characterized in that a stop element (49) is fixed to said shaft (35) against relative rotation and that legs (85,86) of said stop element (49) come to rest at a certain pressure against adjustable stops (89,90) in certain predetermined rotary end positions of said shaft (35).

4. Device according to claim 3, characterized in that said stop element (49) is enclosed in a bearing bush (50) of said shaft (35) and embedded in a lubricant of a said shaft (35).

5. Device according to any of claims 1 to 4, characterized in that said inclined axis (41) intersects said center axis (13) and extends at a right angle relative to the latter.

6. Device according to any of claims 1 to 5, characterized in that said pressing means is designed as holding-down device (36) which engages the rim flange (76) of said wheel (10) at a point spaced from said reference plane (18).

7. Device according to claim 6, characterized in that two holding-down devices (36,36') are used for engaging said rim flange (76) at two diametrically opposite positions.

8. Device according to claim 6 or 7, characterized in that said holding-down devices (36) can be pivoted about an axis extending in parallel to said inclined axis (41), and can be operated by means of a second piston-and-cylinder unit (72).

9. Device according to claim 8, characterized in that said holding-down devices (36,36') and said second piston-and-cylinder unit (72) are integrated into said holding fixture (33,33a) and can be pivoted together therewith.

10. Device according to any of claims 1 to 9, characterized in that an expansion member (45) projects axially from said reference surface (46) and engages a central opening (19) of said mounted wheel (10) so as to fix said wheel radially and axially in the mounted condition.

11. Device according to claim 10, characterized in that said expansion member (45) can be operated by a third piston-and-cylinder unit (70).

12. Device according to claims 8 and 11, characterized in that said second and said third piston-and-cylinder units (72,70) can be operated in synchronism.

13. Device according to claim 12, characterized in that said second and said third piston-and-cylinder units (72,70) are connected to common fluid lines (81,82).

14. Device according to any of claims 1 to 13, characterized in that said holding fixture (33,33a) is provided with axial openings (77) in said reference surface (46) at the positiones of the bores (14) of said mounted wheel (10) and that the clear cross-section of said openings is bigger than that of said bores (14).

15. Device according to any of claims 1 to 14, characterized in that said holding fixture (33,33a) is provided with an eccentric, axially extending centering arbor (79) engaging a coacting eccentric axial opening (80) in said wheel (10), for defining a rotary position of said wheel (10) relative to said holding fixture (33,33a).

16. Device according to any of claims 1 to 15, characterized in that two holding fixtures (33,33a) are arranged on said work table (30) and can be pivoted by means of a common pivoting means (38,60 through 66), said work table being arranged for being pivoted about an axis (31) arranged in parallel and at equal spacing to the center axes (13,13a).

17. Device according to claim 16, characterized in that said holding fixtures (33,33a) are arranged on mutually aligned shafts (35,35a) and that the axial spacing of adjacent lends of said shafts (35,35a) can be adjusted.

## Revendications

1. Dispositif destiné à pratiquer des trous (14) dans une roue (10) d'un véhicule automobile, comportant un logement (33, 33a) pour serrer la roue (10) et comportant un outil (40) motorisé dans lequel le logement (33, 33a) est pourvu d'une surface de référence (46), s'étendant radialement par rapport à l'axe médian (13), sur laquelle la roue (10) serrée repose avec un plan de référence (18) s'étendant radialement à l'axe médian (13), et est pourvu de moyens de pression qui pressent la roue (10) avec le plan de référence (18) sur la surface de référence (46), caractérisé en ce que des moyens (38, 60 à 66) sont prévus pour faire pivoter le logement (33, 33a) avec la roue (10) serrée, autour d'un axe (41), incliné par rapport à l'axe médian (13) de la roue (10), par rapport à une table porte-pièces (30), de manière que l'outil (40) soit orienté dans une première position pivotée, pour pratiquer un trou de fixation (14) dans un voile (12) de la roue (10) et, dans une seconde position pivotée, pour pratiquer un trou de valve (16), incliné par rapport au trou de fixation (14), dans une jante (11) de la roue, en ce que pour faire pivoter le logement (33, 33a) celui-ci est monté solidaire en rotation sur un arbre (35, 35a) aligné avec l'axe incliné (41), en ce qu'en outre une manivelle (37) est calée solidaire en rotation sur l'arbre (35, 35a) et en ce que la manivelle (37) peut être actionnée, en pas angulaires (α) définis, au moyen d'un premier vérin.

2. Dispositif selon la revendication 1, caractérisé en ce que le premier vérin (38) s'articule avec sa tige de piston (63) sur un oeillet (62), à l'extrémité libre (60) de la manivelle (37) et est fixé pivotant, avec son cylindre (64), sur une fixation (65) reliée rigidement avec la table porte-pièces (30).

3. Dispositif selon la revendication 1 ou 2, caractérisé en ce qu'une pièce de butée (49) est reliée solidaire en rotation avec l'arbre (35) et en ce que des branches (85, 86) de la pièce de butée (49) s'appliquent, sous pression, sur des butées (89, 90) ajustables, dans des positions de fin de rotation prédéterminées de l'arbre (35).

4. Dispositif selon la revendication 3, caractérisé en ce que la pièce de butée (49) est encapsulée par une coquille de palier (50) de l'arbre (35) et est entourée par un lubrifiant de l'arbre (35).

5. Dispositif selon l'une des revendications 1 à 4, caractérisé en ce que l'axe incliné (41) coupe l'axe médian (13) et s'étend perpendiculairement à celui-ci.

6. Dispositif selon l'une des revendications 1 à 5, caractérisé en ce que les moyens de pression sont conçus sous la forme d'organes presseurs (36) qui agissent sur la corne de jante (76), éloignée du plan de référence (18), de la roue (10).

7. Dispositif selon la revendication 6, caractérisé en ce que deux organes presseurs (36, 36') agissent dans des positions diamétrales sur la corne de jante (76).

8. Dispositif selon la revendication 6 ou 7, caractérisé en ce que les organes presseurs (36) peuvent pivoter autour d'un axe parallèle à l'axe incliné (41) et peuvent être actionnés au moyen d'un second vérin (72).

9. Dispositif selon la revendication 8, caractérisé en ce que les organes presseurs (36, 36') et le second vérin (72) sont intégrés dans le logement (33, 33a) et peuvent pivoter avec celui-ci.

10. Dispositif selon l'une des revendications 1 à 9, caractérisé en ce qu'un organe d'écartement (45), qui s'engage dans une ouverture centrale (19) de la roue (10) serrée et qui fixe celle-ci radialement et axialement par écartement, fait saillie axialement de la surface de référence (46).

11. Dispositif selon la revendication 10, caractérisé en ce que l'organe d'écartement (45) peut être actionné au moyen d'un troisième vérin (70).

12. Dispositif selon les revendications 8 et 11, caractérisé en ce que le deuxième et le troisième vérins (72, 70) peuvent être actionnés de manière synchrone.

13. Dispositif selon la revendication 12, caractérisé en ce que le deuxième et le troisième vérins (72, 70) sont raccordés à des conduits de fluide (81, 82) communs.

14. Dispositif selon l'une des revendications 1 à 13, caractérisé en ce que le logement (33, 33a) pratiqué dans la surface de référence (46) est pourvu d'ouvertures axiales (77) aux emplacements des trous (14) de la roue (10) serrée, ces ouvertures présentant une plus grande section transversale intérieure que les trous (14).

15. Dispositif selon l'une des revendications 1 à 14, caractérisé en ce que le logement (33, 33a) est pourvu d'une broche de centrage (79) axiale, excentrée, qui, pour définir une position de rotation de la roue (10) par rapport aux logements (33, 33a), s'engage dans une ouverture axiale (80) excentrée correspondante de la roue (10).

16. Dispositif selon l'une des revendications 1 à 15, caractérisé en ce que deux logements (33, 33a) sont prévus sur la table porte-pièces (30) et peuvent pivoter grâce à des moyens de pivotement (38, 60 à 66) communs, la table porte-pièces (30) pouvant pivoter autour d'un axe (31) équidistant et parallèle aux axes médians (13, 13a).

17. Dispositif selon la revendication 16, caractérisé en ce que les logements (33, 33a) sont prévus sur des arbres (35, 35a) alignés entre eux et en ce que l'écartement axial des extrémités adjacentes des arbres (35, 35a) est ajustable.
